## Europäisches Patentamt
## European Patent Office
## Office européen des brevets

(19)

(11) Veröffentlichungsnummer: **0 164 443**

**A1**

(12) # EUROPÄISCHE PATENTANMELDUNG

(21) Anmeldenummer: **84113335.8**

(22) Anmeldetag: **06.11.84**

(51) Int. Cl.⁴: **G 01 F 1/56**

(30) Priorität: **16.05.84 US 610832**

(43) Veröffentlichungstag der Anmeldung:
**18.12.85 Patentblatt 85/51**

(84) Benannte Vertragsstaaten:
**DE FR GB IT SE**

(71) Anmelder: **METAL IMPROVEMENT COMPANY INC.**
**10 Forest Avenue**
**Paramus New Jersey 07652(US)**

(72) Erfinder: **Biehle, William Charles**
**7075 Petri Drive**
**Cincinatti Ohio 45230(US)**

(74) Vertreter: **Engelhardt, Guido, Dipl.-Ing.**
**Montafonstrasse 35 Postfach 1350**
**D-7990 Friedrichshafen 1(DE)**

(54) Vorrichtung zum Messen der Durchflussrate von ferromagnetischen Granulaten.

(57) Die Vorrichtung zum Messen der Durchflußrate von ferromagnetischen Granulaten mit Schwerkraftförderung und/oder pneumatische Förderung ist mit einer Filterrichtung (14A), die einen im wesentlichen konstanten Durchsatz durch eine Zuführungsleitung mit konstantem Druck sicherstellt, und mit einem induktiven Wandler (24A) versehen, bei dem der Strom durch eine Induktionswicklung (33A) in Abhängigkeit von den Änderungen in der Durchflußrate variiert. Die Filtervorrichtung (14A) und der induktive Wandler (24A) weisen jeweils ein senkrecht stehendes Rohr (17A bzw. 28A) auf, wobei diese beiden Rohre (17A,28A) die Innenwand einer ringförmigen Kammer (42) bilden. Das Granulat strömt aus dem Rohr (17A) der Filtervorrichtung (14A) durch Schlitze (19A) in die Kammer (42), weiter durch einen Schlitz (43) in das Rohr (28A) des induktiven Wanders (24A) und von dort zur Ausgangsleitung. Der sich im Inneren des Rohres (28A) des Wanders (24A) ausbildende Pegelstand (51-54) des ferromagnetischen Granulates ist ein Maß für die Durchflußrate, verändert die Indiktivität der Induktionswicklung (33A) und wird mittels des Stromes durch diese bestimmt.

FIG. 5

**0164443**

(

A 4156

METAL IMPROVEMENT COMPANY INC.,
Paramus New Jersey 07652, U.S.A.

Vorrichtung zum Messen der Durchflußrate
von elektromagnetischen Granulaten

Die Erfindung bezieht sich auf eine Vorrichtung zum Messen
der Durchflußrate metallischer Granulate, insbesondere
solcher in einer Schrottverarbeitungseinrichtung.

Eine solche Vorrichtung ist aus der EP-OS 0 111 059 bekannt und ist Teil einer Anlage zum Härten durch Abklopfen.

Der Erfindung liegt die Aufgabe zugrunde, eine Vorrichtung
zum Messen der Durchflußrate eines Mediums, nachfolgend
"Granulat" genannt, zu schaffen.

Bei einem ersten Ausführungsbeispiel der Erfindung sind
ein Filterelement und eine Meßvorrichtung separate Elemente, von denen jedes ein Außenrohr und ein koaxial in ihm
untergebrachtes Innenrohr kleineren Durchmessers unter
Bildung einer dazwischenliegenden Ringkammer umfaßt. Das
Filterelement und die Meßvorrichtung sind untereinander
verbunden, so daß Granulat von einem Reservoir, d.h. einem
Schüttgutbehälter, über eine geeignete Zuführungsleitung
in das erste Innenrohr des Filterelements strömt, von dort
aus über im Innenrohr befindliche Schlitze in die Ringkammer der Filtervorrichtung. Danach strömt das Granulat,
beim Ausführungsbeispiel Schrott, in das zweite, innere
Rohr, das einen Teil der Meßvorrichtung bildet, und von

dort über eine Anzahl auf Abstand angebrachter Öffnungen in die Ringkammer der Meßvorrichtung.

Von der Ringkammer aus strömt das von der Meßvorrichtung kommende Granulat über eine geeignete Förderleitung zu einer Düse der Hammerbahn.

Bei einem zweiten Ausführungsbeispiel der Erfindung bilden das Filterelement und die Meßvorrichtung eine Baueinheit. Das Filterelement und die Meßvorrichtung haben ein gemeinsames Außenrohr, und ihre entsprechenden Innenrohre liegen der Länge nach so auf Stoß, daß sich eine gemeinsame Ringkante dazwischen ergibt. Das erste, innere Rohr des Filterelements steht, wie beim ersten Ausführungsbeispiel, mit dem Schüttgutbehälter in Verbindung, um über eine geeignete Zuführungsleitung Granulat zu erhalten, und der gemeinsamen Ringkammer zuzuführen. Von hier aus strömt das Granulat über einen länglichen, sich verjüngenden Schlitz in das zweite, innere Rohr der Meßvorrichtung hinein, und von hier aus über eine geeignete Zuführungsleitung zu der Düse der Hammerbahn.

Bei einem dritten Ausführungsbeispiel der Erfindung ist die gemeinsame Ringkammer mit einem halbrunden Einsatz versehen, so daß nur annähernd die Hälfte des normalen Durchflußquerschnitts der Ringkammer wirkt, durch den Granulat von dem Innenrohr in den Ringkammerteil gelangen kann, der einen Teil des Filterelements bildet. Der reduzierte Durchflußquerschnitt bewirkt eine stabilere Masse, so daß die Wandlerwicklung empfindlicher auf Dichteänderungen der Masse des Granulats reagieren kann, die mit Änderungen der Durchflußrate zusammenhängt.

Die Erfindung wird an Ausführungsbeispielen anhand von Zeichnungen erläutert. Es zeigen

Fig. 1 einen teilweisen Längsschnitt durch ein erstes

A 4156 — 3 —

0164443

Ausführungsbeispiel, bei dem ein Hauptdruckfilter und eine
Meßeinrichtung eine Baueinheit bilden,

Fig. 2 einen teilweisen Querschnitt entlang einer Linie
2-2 in Fig. 1,

Fig. 3 einen Teilschnitt durch die Filtervorrichtung und
die Meßeinrichtung gemäß einem zweiten Ausführungsbeispiel
der Erfindung,

Fig.4 einen teilweisen Querschnitt entlang einer Linie
4-4 in Fig. 3, und

Fig. 5 eine schematische Ansicht des elektrischen Kreises
und der Vorrichtung gemäß einem weiteren Ausführungsbeispiel der Erfindung.

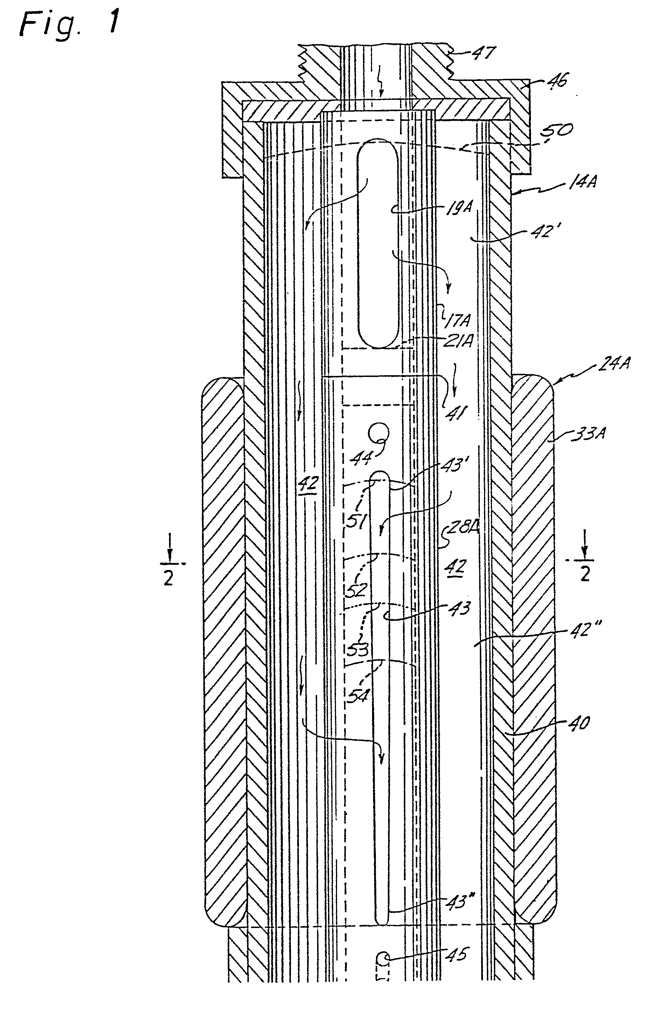

In den Fig. 1, 2 und 5 ist ein Teil einer mit Schwerkraftzuführung arbeitender Schrottbearbeitungsvorrichtung
gemäß einem Ausführungsbeispiel der Erfindung dargestellt.
Es unterscheidet sich grundsätzlich von der in der EP-OS
0 111 059 beschriebenen Vorrichtung dadurch, daß die
mit Druck arbeitende Filtervorrichtung und die Meßeinrichtung zu einer Baueinheit zusammengefaßt sind, während bei
der bekannten Vorrichtung Filtervorrichtung und Meßeinrichtung separate und verschiedene Bauteile sind, obwohl sie untereinander verbunden sind. Ein weiterer Unterschied des Ausführungsbeispiels gemäß der vorliegenden
Erfindung gegenüber der bekannten Vorrichtung besteht
darin, daß das Innenrohr der Meßvorrichtung einen einzigen, länglichen und sich verjüngenden Schlitz anstatt
einer Anzahl Bohrungen im Innenrohr der Meßvorrichtung
aufweist und mit einer stabileren Masse von Schrottpartikeln als bei der bekannten Vorrichtung arbeitet. Ein weiterer Unterschied zu der vorbekannten Vorrichtung besteht
in einer Vereinfachung der elektrischen Ausrüstung, indem
eine Konstanthalterdrossel bei der vorliegenden Erfindung nicht mehr erforderlich ist.

Gleiche Teile, die bei der vorliegenden Patentanmeldung
wie bei der vorveröffentlichten, europäischen Anmeldung
Nr. 83108715.0 (EP-OS 0 111 059) vorkommen, werden in der
nachfolgenden Beschreibung und den Zeichnungen zu der vorliegenden Patentanmeldung mit gleichlautenden Bezugzeichen, in der vorliegenden Patentanmeldung aber jeweils mit
dem Zusatz "A", versehen.

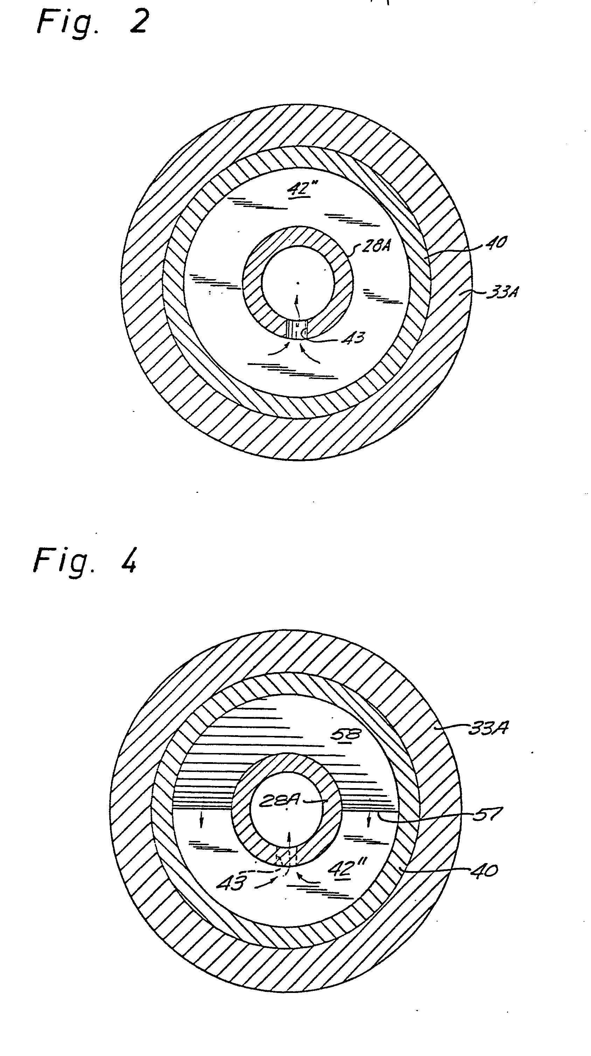

In den Figuren 1 und 2 weisen ein Druckfilter 14A und eine
Meßvorrichtung 24A ein gemeinsames, äußeres Rohr 40 auf,
in der innere Rohre 17A und 28A des Druckfilters 14A bzw.
der Meßvorrichtung 24A untergebracht sind. Die inneren
Rohre 17A und 28A stoßen an einer Stelle 41 zusammen und
bilden gemeinsam mit dem äußeren Rohr 40 eine ringförmige
Kammer 42, die einen oberen Kammerabschnitt 42' bzw. einen
unteren Kammerabschnitt 42'' in dem Druckfilter 14A und
der Meßvorrichtung 24A aufweist. Das innere Rohr 17A ist
an seinem Boden durch eine Wandung 21A oder einen Verschluß verschlossen und mit einer Anzahl länglicher
Schlitze 19A versehen, die dem Zweck dienen, Granulat oder
Schrottpartikel aus dem Inneren des inneren Rohrs 17A in
den ringförmigen Kammerabschnitt 42' in Richtung der in
den Zeichnungen angedeuteten Pfeile durchzulassen. Eine
als Induktionsspule arbeitende Wicklung 33A umgibt das
äußere Rohr 40 im Bereich des unteren Kammerabschnitts
42'' der ringförmigen Kammer 42. Das innere Rohr 28A der
Meßvorrichtung 24A ist mit einem einzelnen, länglich ausgeformten Schlitz 43 in einer Wand versehen. Der Schlitz
43 erstreckt sich in Längsrichtung des inneren Rohrs 28A
und verjüngt sich, beginnend mit einer maximalen Weite in
seinem oberen Endteil 43' hin zu seinem unteren Endteil
43'', wobei im Bereich des Endteils 43'' die schmalste
Stelle des Schlitzes 43 vorgesehen ist. Der sich ändernde
Durchflußquerschnitt des Schlitzes 43 dient der Steuerung
des Durchflusses der Schrottpartikel aus dem ringförmigen Kammerabschnitt 42'' in das Innere des inneren Rohrs 28A,
wie dies in den Zeichnungen durch Pfeile angedeutet ist,
wobei der Durchfluß mit der Änderung des Schrottpartikelpegels variiert und ein Aussgangssignal in der Wicklung
33A zur Folge hat, das sich mit der Änderung der Durchflußrate der Schrottpartikel linear ändert. Am oberen
Ende des inneren Rohrs 28A ist auch eine Öffnung 44 vorgesehen, die dazu dient, das Innere des inneren Rohrs 28A zu
füllen, wenn das System nicht auf Durchlauf geschaltet
ist, und dementsprechend ein verhältnismäßig stabiles
elektrisches Signal während dieses Betriebszustands liefert. Am unteren Ende des inneren Rohrs 28A ist auch eine
Öffnung 45 vorgesehen, die die Aufgabe hat, die ringförmige Kammer 42 von Schrottpartikeln dann, wenn es
erforderlich ist, zu befreien, um die Anlage zum Zweck der
Inspektion oder einer Reparatur abzuschalten. Durch die
Öffnung 45 wird auch bei niedriger Durchflußrate eine
gleichmäßigere Dichte der Schrottpartikel erreicht, als
dies ohne eine solche Öffnung möglich wäre. Diese Gleichmäßigkeit hinsichtlich der Dichte wird durch die Öffnung
45 dadurch erreicht, daß sie den Durchfluß aufrechterhält
und hierdurch verhindert, daß Schrottpartikel zusammenbakken bzw. verklumpen. Da der Bypass durch die Öffnung 45
für die Schrottpartikel gleichmäßig und konstant ist, kann
der elektronische Meßkreis auf diesen Bypass-Durchfluß
eingestellt werden und liefert dementsprechend eine genaue
Durchflußrate.

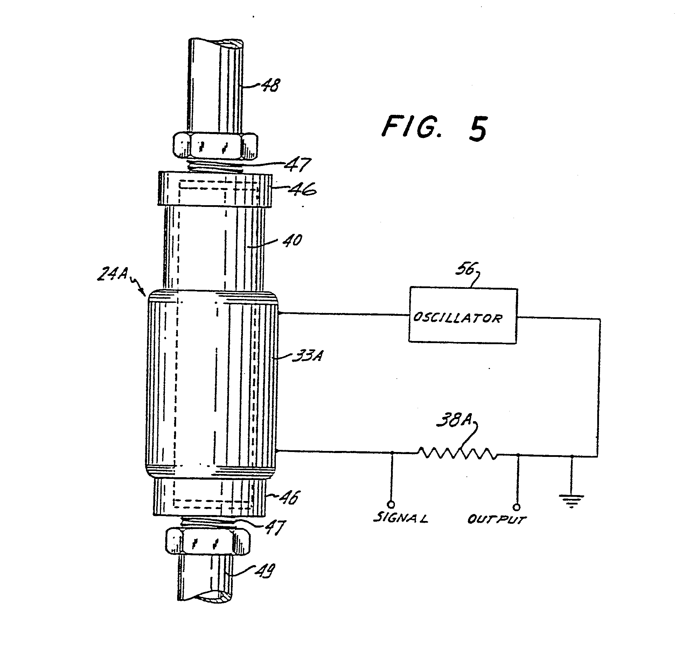

Die einander gegenüberliegenden Enden des äußeren Rohrs 40
sind durch Endkappen 46 verschlossen, die auf geeignete
Weise am äußeren Rohr 40 angebracht sind. Jede Endkappe 46
weist einen mit einem Gewinde versehenen, axial angeordneten Stutzen 47 zum Anschluß der gesamten Druck-Meßvorrichtungseinheit an eine Zuführungsleitung 48 und eine Abführungsleitung 49 (Fig. 5) auf. Wie aus Fig. 1 hervorgeht,
ist jeder Stutzen 47 und damit jede Endkappe 46 mit einer
zentralen Bohrung versehen, die koaxial zu dem Inneren der dazugehörigen inneren Rohre 17A und 28A angeordnet ist und mit diesem in Verbindung steht, so daß der Stahlschrott oder ein anderes elektromagnetisch handhabbares Granulat von der Zuführungsleitung 48 (Fig. 5) in das innere Rohr 17A (Fig. 1, 2), von dort in das innerer Rohr 28A und von hier aus zur Abführungsleitung 49 (Fig. 5) strömen kann.

## Funktionsweise

Das granulierte Material, also das Granulat, z.B. Stahlschrott, läuft kontinuierlich aus einem mit derartigem Material gefüllten Schüttgutbehälter über die Zuführungsleitung 48 (Fig. 9) dem inneren Rohr 17A (Fig. 1) zu, von dort über Schlitze 19A in einen Kammerabschnitt 42' einer gemeinsamen Kammer 42. Der Strom des granulierten Materials (nachfolgend "Stahlschrott" genannt) bewegt sich auf Grund der Gravität oder mit Unterstützung eines geringen, pneumatischen Druckes oder der Kombination von beidem. Der Stahlschrott gelangt dann in den Kammerabschnitt 42'' der gemeinsamen Kammer 42 und über den Schlitz 43 in das Innere des inneren Rohrs 28A. Vom Inneren des inneren Rohrs 28A strömt der Stahlschrott in die Abführungsleitung 49 und zu einer Schrottbearbeitungsdüse (in der Zeichnung nicht gezeigt) zur Abgabe des Stahlschrotts an ein Werkstück (in der Zeichnung nicht gezeigt) zur Oberflächenbearbeitung des Werkstücks.

Findet kein Durchfluß statt, liegt der Pegel des Stahlschrotts in der gemeinsamen Kammer 42 ungefähr dort, wo in Fig. 1, 2 eine unterbrochene Linie 50 angedeutet ist, während der Pegel im inneren Rohr 28A ungefähr dort liegt, wo er durch eine andere, unterbrochene Linie 51 (Fig. 1) angedeutet ist. Bei geringer Durchflußrate nimmt der Pegel in der Kammer 42 etwas ab, während der Pegel des Stahlschrotts im inneren Rohr 28A annähernd auf denjenigen Pegel absinkt, der durch die unterbrochene Linie 52 (Fig.

1) angedeutet ist. Die Pegel von Stahlschrott in dem inneren Rohr 28A nehmen weiter ab, wenn die Durchflußrate weiter ansteigt. Solche niedrigeren Pegel werden durch eine unterbrochene Linie 53 (Fig. 1) sowie eine weitere, unterbrochene Linie 54 angedeutet. Bei maximaler Durchflußrate entspricht der Pegel des Stahlschrotts im inneren Rohr 28A annähernd demjenigen Pegel, der durch die unterbrochene Linie 54 markiert ist. Diese Pegeländerungen des Stahlschrotts werden durch die Wicklung 33A in Abhängigkeit von der Masse oder Dichte des Stahlschrotts festgestellt, und dementsprechend entsteht eine variable Signalspannung über einem Widerstand 38A (Fig. 5).

Das Druckfilter und die Meßvorrichtung der Figuren 1 und 2 bilden einen elektrischen Kreis (Fig. 5) mit einem Oszillator 56, der Wicklung 33A und dem Widerstand 38A als Ladewiderstand, wobei alle vorerwähnten Bauteile in Reihe geschaltet sind. Der Oszillator 56 bildet die elektrische Stromquelle. Liegen Spannung und Strom im wesentlichen in Phase, mißt der Stromkreis genauer die Durchflußrate bei linearer Änderung in der Meßvorrichtung 24A. Der Stromkreis wird bei einem Ausführungsbeispiel mit einer Frequenz von 7,7 kHz und 6 Volt betrieben.

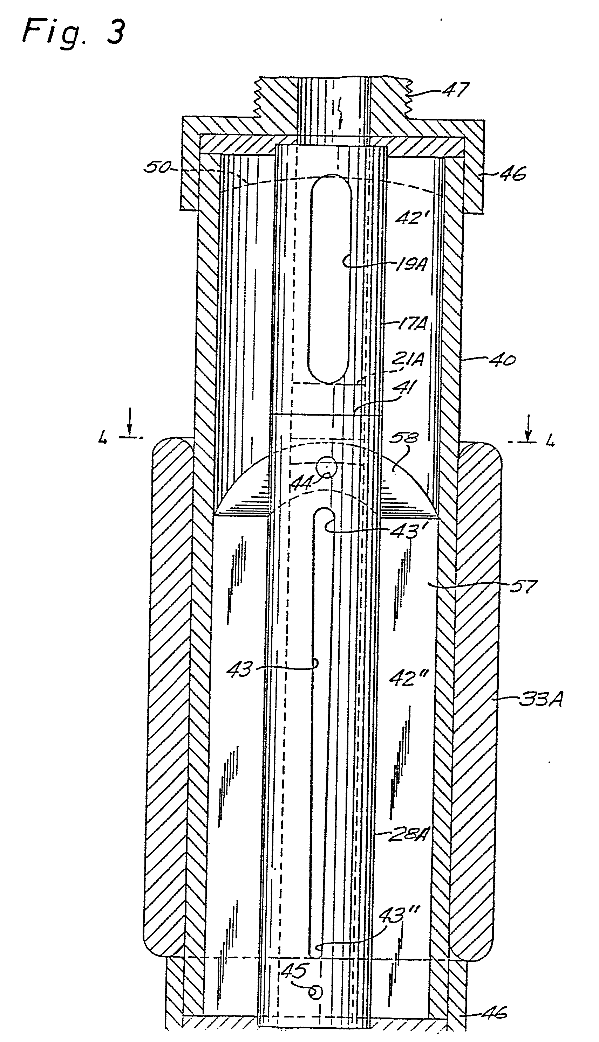

Anhand der Figuren 3 und 4 wird ein weiteres Ausführungsbeispiel der Erfindung beschrieben, bei dem die anhand der Figuren 1 und 2 beschriebene Filter- und Meßvorrichtung mit einem reduzierten Volumen der gemeinsamen Kammer 42 ausgestattet ist. Da die Vorrichtungen der Figuren 1 und 2 sowie 3 und 4 mit Ausnahme des vorerwähnten Unterschieds einander identisch sind, sind die Teile der Figuren 3 und 4 mit gleichen Bezugszeichen wie die Teile der Figuren 1 und 2 versehen. Die Reduzierung des Volumens der Kammer 42 der Vorrichtung wird, wie aus den Figuren 3 und 4 gut zu sehen ist, durch Einbau eines Einsatzes 57, vorzugsweise aus ferromagnetischem Material, erreicht, der hinsichtlich seines Radius und seiner Länge so dimensioniert ist, daß er gut in den Ringraum im Kammerabschnitt 42'' (Fig. 4) hineinpaßt. Der Einsatz 57 ist im inneren Rohr 28A, dem Schlitz 43 abgekehrt, eingesetzt. Der Einsatz 57 ist so gestaltet, daß seine obere Begrenzungsfläche 58 in einer Ebene liegt, die gegenüber einer transversen, horizontal ebenen Fläche durch das innere Rohr 28A verkantet ist. Diese abgeschrägte, obere Begrenzungsfläche verhindert die Anlagerung von Stahlschrott und hält den Durchflußwiderstand vom Kammerabschnitt 42' zum Kammerabschnitt 42'' auf einem Minimum. Der Einsatz 57 wirkt als feste und stabile Masse in der Meßvorrichtung 24A, so daß Dichteänderungen der Schrottpartikel, die im verbleibenden, wirksamen Teil des Kammerabschnitts 42'' auftreten, durch den elektronischen Kreis (Fig. 5) innerhalb eines kleineren Spannungsbereichs gemessen werden; dementsprechend reagiert die Elektronik empfindlicher auf Änderungen in der Dichte der Schrottpartikel. Die Verwendung des Einsatzes 57 reduziert ferner die erforderliche Stromstärke und macht das System dementsprechend wirtschaftlicher und reduziert die Wahrscheinlichkeit eines Fehlers bei Wärmeentwicklung.

Die Erfindung wurde vorstehend anhand eines Ausführungsbeispiels erklärt, bei dem das Granulat unter Schwerkraft transportiert wird, nämlich Stahlschrott. Auf ähnliche Weise können Granulate mit geringem Pneumatikdruck transportiert werden, wie dies aus der US-PS 4 365 493 bekannt ist.

Es ist auch möglich, die Begrenzungsfläche 58 des Einsatzes 57 spiralförmig auszuführen.

## Ansprüche

1.    Vorrichtung zum Messen der Durchflußrate von elektromagnetischen Granulaten, bestehend aus

(a) einem Schüttgutbehälter zur Bereitstellung von Granulaten, in einer Höhe angebracht, die einen geeigneten
Druck für den Vortrieb der Granulate gewährleistet,

(b) einer Filtervorrichtung, die unterhalb vom Schüttgutbehälter angebracht, diesem nachgeschaltet ist und mit ihm
in Verbindung steht, die Granulate von ihm übernimmt und
Mittel zur Stabilisierung der Durchflußrate der Granulate
zur Bereithaltung eines konstanten Drucks unterhalb der
Filtervorrichtung aufweist,

(c) eine Meßvorrichtung unterhalb der Filtervorrichtung,
dieser nachgeschaltet und mit ihr zusammenarbeitend zur
Übernahme der Granulate von der Filtervorrichtung, wobei
in der Meßvorrichtung Mittel zum Halten eines Pegels der
Granulate als Bezugsgröße für die Durchflußrate und elektrisch induktive Mittel vorgesehen sind, die in Abhängigkeit von dem Pegel der Granulate in der Meßvorrichtung
ein elektrisches, pegelabhängiges Signal liefern, und

(d) düsenartige Mittel unterhalb der Meßvorrichtung zur
Zuführung und Abgabe der Granulate an ein Werkstück,

dadurch g e k e n n z e i c h n e t , daß die Filtervorrichtung ein vertikal ausgerichtetes, erstes, inneres,
hohles Rohr (17A) und die Meßvorrichtung (24A) ein vertikal ausgerichtetes, zweites, inneres, hohles Rohr (28A)
aufweist, beide Rohre (17A, 28A) auf Stoß zueinander angeordnet sind, eine Wandung (21A) die Innenräume der beiden inneren Rohre (17A, 28A) voneinander trennt, ein gemeinsames, äußeres Rohr (40) größeren Durchmessers als der beiden inneren Rohre (17A, 28A) koaxial um die beiden inneren Rohre vorgesehen ist, so daß eine Kammer (42) gebildet wird, Endkappen (46) zum Verschließen der beiden gegenüberliegenden Enden der Kammer (42) vorgesehen sind, ein erster Stutzen (47) in einer Endkappe zum Anschließen des ersten, inneren Rohrs (17A) an den Schüttgutbehälter und zum Zuführen von Granulat aus dem Schüttgutbehälter angebracht ist, ein erster Schlitz (19A) in dem ersten, inneren Rohr (17A) zum Hindurchleiten von Granulat vom Inneren des ersten, inneren Rohrs (17A) in die Kammer (42) und ein zweiter Stutzen (47) in der anderen Endkappe (46) zum Anschließen des zweiten, inneren Rohrs (28A) an eine Düse und zur Zuführung von Granulat an dieselbe sowie ein zweiter Schlitz (43) zum Hindurchleiten von Granulat aus der Kammer (42) in das Innere des zweiten, inneren Rohrs (28A) vorgesehen sind.

2. Vorrichtung nach Anspruch 1, dadurch g e k e n n -  z e i c h n e t , daß der zweite Schlitz (43) des zweiten, inneren Rohrs (28A) parallel zur Längsachse des zweiten, inneren Rohrs (28A) ausgerichtet ist und sich über einen erheblichen Teil der Länge des inneren Rohrs erstreckt.

3. Vorrichtung nach Anspruch 2, dadurch g e k e n n -  z e i c h n e t , daß der Schlitz (43) sich in der Weise verjüngt, daß ein maximaler Durchflußbereich in Nähe des oberen Endes des Schlitzes angeordnet ist.

4. Vorrichtung nach Anspruch 1, dadurch g e k e n n -  z e i c h n e t , daß als Filter ein vertikal ausgerichtetes, erstes, inneres Rohr (17A) und als Meßvorrichtung (24A) ein vertikal ausgerichtetes, zweites, inneres Rohr (28A) vorgesehen sind, die gegenseitig auf Stoß montiert sind, daß eine Wandung (21A) zum Trennen des Inneren des ersten, inneren Rohrs (17A) vom Inneren des zweiten,

0164443

inneren Rohrs (28A) angebracht ist, daß ein gemeinsames äußeres Rohr (40) größeren Durchmessers koaxial zu dem ersten Rohr (17A) und dem zweiten Rohr (28A) vorgesehen ist, so daß zwischen den inneren Rohren (17A, 28A) und dem äußeren Rohr (40) eine ringförmige Kammer (42) gebildet wird, daß Endkappen (46) zum Verschließen gegenüberliegender Enden der Kammer (42) vorgesehen sind und ein erster Stutzen (47) in einer Endkappe (46) zum Anschluß des ersten, inneren Rohrs (17A) an den Schüttgutbehälter und zum Zuleiten von Granulat vom Schüttgutbehälter zum ersten, inneren Rohr (17A) angebracht ist, daß ein erster Schlitz (19A) in dem ersten, inneren Rohr (17A) zum Zuleiten von Granulat aus dem Inneren des ersten, inneren Rohrs (17A) in die Kammer (42) eingelassen ist, und daß ein zweiter Stutzen (47) in der anderen Endkappe (46) zum Anschluß des zweiten, inneren Rohrs (28A) an die Düse und zur Zufuhr von Granulat vom Inneren des zweiten, inneren Rohrs (28A) zur Düse angebracht ist, und in dem zweiten, inneren Rohr (28A) ein zweiter Schlitz (43) zum Zuleiten von Granulat von der Kammer (42) in das Innere des zweiten, inneren Rohrs (28A) vorgesehen ist.

5. Vorrichtung nach Anspruch 4, dadurch g e k e n n -
z e i c h n e t , der zweite Schlitz (43) im zweiten,
inneren Rohr (28A) parallel zur Längsachse des zweiten, inneren
Rohrs (28A) ausgerichtet ist und im wesentlichen die
gleiche Länge, wie das Rohr (28A) hat.

6. Vorrichtung nach Anspruch 5, dadurch g e k e n n -
z e i c h n e t , daß der Schlitz (43) in der Weise verjüngt ausgeführt ist, daß ein maximaler Durchfluß im Bereich des oberen Endes des zweiten, inneren Rohrs (28A)
und ein minimaler Durchfluß im Bereich seines unteren Endes erreicht wird.

7. Vorrichtung nach Anspruch 4, dadurch g e k e n n -
z e i c h n e t , daß am unteren Ende des zweiten, inneren Rohrs (28A) eine Öffnung (45) zum Durchleiten von Granulat aus der Kammer (42) in das Innere des zweiten, inneren Rohrs (28A) vorgesehen ist.

8. Vorrichtung nach einem oder mehreren der Ansprüche 1 bis 7, dadurch g e k e n n z e i c h n e t , daß in der Kammer (42) ein Einsatz (57) zur Verringerung des Volumens dieser Kammer vorgesehen ist.

9. Vorrichtung nach Anspruch 8, dadurch g e k e n n - z e i c h n e t , daß der Einsatz (57) halbrunden Querschnitt aufweist und radial so bemessen ist, daß er genau in die Kammer (42) paßt, daß dessen Längserstreckung wie die des Schlitzes (43) verläuft und sich der Einsatz auf der sich dem Schlitz abgewandten Seite in dem zweiten, inneren Rohr (28A) befindet.

10. Vorrichtung nach Anspruch 9, dadurch g e k e n n - z e i c h n e t , daß die obere Begrenzungsfläche (58) des Einsatzes (57) gegenüber der Horizontalen in der Weise geneigt ist, daß Granulat in den Kammerabschnitt (42'') der Kammer (42) abgelenkt wird, der ein reduziertes Volumen mit minimalem Durchströmwiderstand in der Kammer aufweist.

11. Vorrichtung nach Anspruch 10, dadurch g e k e n n - z e i c h n e t , daß der Einsatz (57) aus ferromagnetischem Material besteht.

*Fig. 1*

Fig. 2

Fig. 4

# Fig. 3

FIG. 5

48

47

46

40

24A

33A

OSCILLATOR 56

38A

SIGNAL    OUTPUT

46

47

49

| | **EINSCHLÄGIGE DOKUMENTE** | | EP 84113335.8 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) | |
| D,P, A | EP - A2 - 111 059 (METAL IMPROVE-MENT) <br> * Fig. 2,3 * <br> -- | 1,4 | G 01 F 1/56 | |
| A | DE - A - 2 303 252 (ATLAS COPCO AB) <br> * Fig. 1 * <br> -- | 1 | | |
| A | DE - A1 - 2 923 203 (SELBSTFINAN-ZIERUNGSANSTALT VADUZ) <br> * Fig. 1 * <br> ---- | | | |
| | | | RECHERCHIERTE SACHGEBIETE (Int. Cl 4) | |
| | | | G 01 F 1/00 <br> B 24 C 3/00 | |
| | Der vorliegende Recherchenbericht wurde für alle Patentansprüche erstellt. | | | |

| Recherchenort | Abschlußdatum der Recherche | Prüfer |
|---|---|---|
| WIEN | 24-07-1985 | BURGHARDT |